# EUROPEAN PATENT APPLICATION

(11) **EP 1 161 083 A1**
(43) Date of publication of application: **05.12.2001**
(21) Application number: 01113336.0
(22) Date of filing: 01.06.2001
(51) Int. Cl.: H04N 5/00

(54) **Improvements to broadcast data receiver and data transmission apparatus**

(30) Priority: 02.06.2000 GB 0013324
(71) Applicant: Pace Micro Technology Ltd, Saltaire, Shipley BD18 3LF (GB)
(72) Inventor: Hoath, William, Altrincham, Cheshire WA15 OLA (GB)
(74) Representative: Wood, Graham

(57) **Abstract**

The invention relates to the transmission of digital data which can be processed to generate video, audio and/or auxiliary data for television programmes and related information. As part of the data transmission a data stream of Out of Band (OOB) data is typically transmitted. However this requires additional components to be provided in the broadcast data receivers. The present invention allows for the transcoding and reformatting of data at the broadcast location which allows the transmission of data between the broadcast location and the broadcast data receivers without the need for an OOB tuner to be provided at the broadcast data receiver.

## Description

The invention to which this application relates is to an improvement in the transmission of broadcast data, and operation of a broadcast data receiver of the type which can be provided for connection to further apparatus, such as a television set or display screen and speakers or may be provided as an integral part of a television set. In whichever form the receiver is provided, the same is provided for the purpose of receiving data, typically in a digital format, which is transmitted from a remote location, typically via any of satellite, cable or terrestrial broadcast systems. The data is typically provided by broadcasters of data such as television service providers, individual channel providers and so on.

When the data is received at the receiver, it is decoded from the encoded format in which the same is transmitted and processed. Video, audio and/or auxiliary material such as teletext or programme guide material can then be selectively generated via the display screen and speakers.

A primary concern to manufacturers of the broadcast data receiver is the cost of manufacture of the receiver in terms of the component costs and there is a continuing pressure for the same to be manufactured at the cheapest price possible. One current requirement is for the broadcast data receiver to include an Out of Band (OOB) Tuner for receiving OOB data streams, and this is particularly prevalent with broadcast data receivers for use with cable transmission systems. However, the provision of the OOB tuner adds a significant cost factor to the receiver.

The aim of the present invention is to provide a broadcast data receiver and data transmission apparatus, which allows the cost of the broadcast data receiver to be reduced.

In a first aspect of the invention there is provided a system for the transmission of digital data from a broadcast location to a plurality of receiver locations, each receiver location including a broadcast data receiver for the processing of the data and generation of video, audio and/or auxiliary data, each receiver including a DOCSIS modem, or equivalent and characterised in that at the broadcast location or head end of the system there is provided a transcoder unit which transcodes data from an out of band data stream generated at the head end in a format such that, when received by the receiver, the same is received via the DOCSIS modem.

Thus the invention enables broadcast data receivers to be developed which require no Out Of Band (OOB) tuner to be provided even though they will function on a standard network, which delivers OOB data. The transcoder unit therefore transcodes data between the OOB data stream and Ethernet, to allow the transmission and reception of the data by a plurality of receivers in a format which does not require each receiver to be provided with an OOB tuner.

The DOCSIS modem (Data Over Cable Service Interface Specification modem) is a type of modem which defines standards for cable modems.

In a further aspect of the invention there is provided a system for the transmission of digital data between a broadcast location and a plurality of receiver locations, each receiver location including a broadcast data receiver for the processing of the data and generation of video, audio and/or auxiliary data from said received data, each broadcast data receiver including a DOCSIS modem, or equivalent and capable of transmitting data from the receiver to the broadcast location and characterised in that in the transmission of data from a receiver to the broadcast location there is provided a data reformatting unit which upon receiving data from any of the receivers reformats the same as required.

The reformatting unit at the broadcast location allows for transcoding of data between the Ethernet and the Out of Band Unit.

Thus, in accordance with the second aspect of the invention there is provided a system and in particular a transcoding unit at the head end which allows for transcoding of data between the Ethernet and the Out of Band data.

A specific embodiment of the invention is now described with reference to the accompanying figures wherein
Figure 1 illustrates in schematic fashion a transcoding unit in accordance with the invention;
Figures 2A, 2B and 2C illustrate embodiments of downstream protocol stacks from the transcoder unit of Figure 1; and
Figure 3 illustrates an embodiment of an upstream protocol stack for the transcoder unit in accordance with the invention.

The invention provides a system and apparatus relating to a transmission system comprising a broadcast location or head end from which the digital data is transmitted in an encoded format for reception by a plurality of broadcast data receivers at various spaced locations, but all, in this case, connected to a cable transmission network along which the transmitted data passes. In the embodiment shown there is, amongst others, what is known as an Out of Band data stream transmitted. Conventionally, in order to receive and process the OOB data stream, each receiver is required to include an OOB tuner to allow that particular data stream to be received. This component adds considerable expenditure to the cost of the receiver.

In addition to receiving data, the broadcast data receivers are provided with means to allow data to be sent upstream to the broadcast location and in order to achieve this, a particular form of modem is conventionally required to be provided.

Each broadcast data receiver is also provided with a DOCSIS modem and the present invention allows this modem to be used to receive the OOB data without the need for an OOB tuner to be provided by providing a transcoding unit in accordance with the invention at the head end or broadcasting location. By providing the transcoding unit at the head end, so the need for each receiver to include an OOB tuner is removed and hence the cost of manufacture and supply of each receiver is significantly reduced.

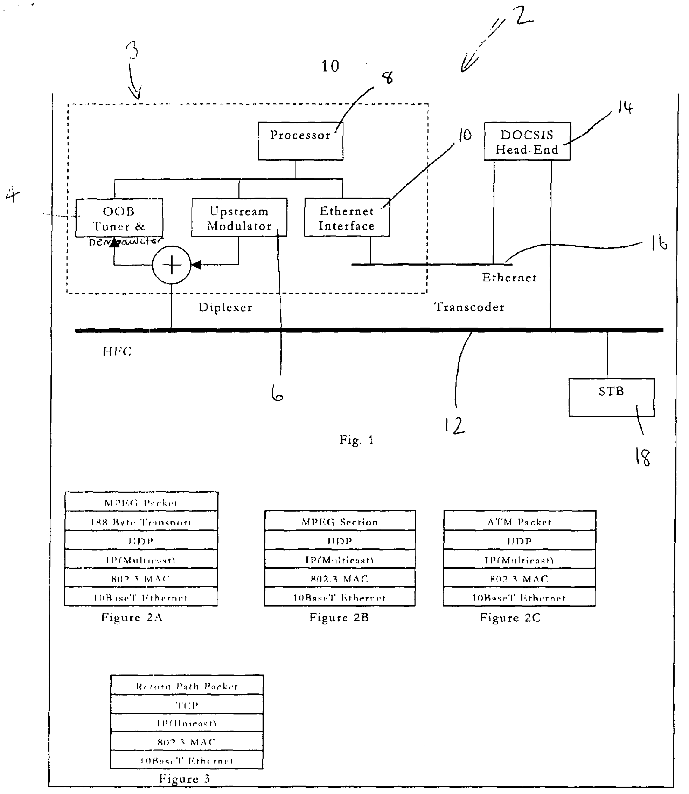

Referring now specifically to the Figures, Figure 1 illustrates a transmission system which illustrates at the head end or broadcast location 2 a transcoder unit 3 in accordance with the invention, which includes an OOB tuner and demodulator 4, a modulator 6, data processor 8 and Ethernet interface 10. The Transcoder unit is connected to the cable transmission network 12 via a diplexer and to the DOCSIS head end 14 via an Ethernet connection 16 with the DOCSIS head end in turn connected to the cable transmission network 12 as shown. The cable transmission network is then connected with a number of broadcast data receivers 18 which can number in the tens of thousands.

In accordance with the invention, to pass the data downstream, the Transcoder unit 3 receives the data from the OOB data stream, which is broadcast at the head-end. The unit identifies and selects non-null packets of data from the data stream and encapsulates them in an Internet Protocol (probably User Datagram Protocol (UDP)) packet format. These packets are then transmitted over the Ethernet connection via the DOCSIS head end and are addressed to a Multicast address. This multicast address ensures that the destination of the packets is to all of the broadcast data receivers connected to the cable transmission system as required by the broadcaster and thus the entire population of broadcast data receivers will receive the packets of the data.

There are several modes of operation for the transcoder unit 3, dependent upon the way the data is encapsulated in packets in the OOB data stream. If the OOB data is carried in MPEG-2 transport format a first mode is for the same to re-packetise 188-byte transport stream packets. In a second mode, if the OOB data is encapsulated in MPEG sections, it could remove the transport data stream layer off and only re-packetise the MPEG sections. If the data is carried in other formats, such as Asynchronous Transfer Mode (ATM) packets, then these again may be encapsulated in packets and passed on.

As previously mentioned, it is another aspect of the invention for the transmission of data upstream and in order to achieve this, the transcoder unit 3 receives data from the DOCSIS head-end 14 via the Ethernet connection and which in turn has received the data from the broadcast data receivers via the cable transmission system. The transcoder unit 3 removes any Ethernet and IP (Internet Protocol) layers, formats the data and transmits it. In a preferred embodiment, the upstream burst modulator will modulate using QPSK (Quadrature Phase Shift Keying)/Differential or QAM (Quadrature Amplitude Modulation) encoding, thus it will conform to that protocol used on many of the current cable networks.

Figures 2A, 2B and 2C illustrate examples of possible downstream protocol data stacks generated from the transcoder unit 3. Figure 3 illustrates a possible upstream protocol data stack generated in accordance with the invention.

In addition to trans-coding the data, the transcoder unit can maintain compatibility with the upstream burst modulator by monitoring for power, frequency and other control messages, which it passes through and adjust its' transmission parameters accordingly.

A possible method of controlling security access to the system is by using the Dynamic Host Configuration Protocol (DHCP) configuration that is received by the broadcast data receiver when it initialises the DOCSIS modem in the receiver. The configuration data sent to the broadcast data receiver can contain the IP address of the Transcoder and the multicast address that needs to be used by the broadcast data receiver, in order to receive downstream data. Using this DHCP mechanism, it is possible to enable relevant broadcast data receivers by their MAC address.

The invention as herein described enables the manufacturers of broadcast data receivers to produce the same without the need for the same to support OOB data streams but still be able to function on networks which are dependent upon the OOB data stream. This will result in a significant reduction in cost for these broadcast data receivers.

## Claims

1. A system for the transmission of digital data from a broadcast location to a plurality of receiver locations, each receiver location including a broadcast data receiver for the processing of the data and generation of video, audio and/or auxiliary data, each receiver including a DOCSIS modem, or equivalent and **characterised in that** at the broadcast location or head end of the system there is provided a transcoder unit which transcodes data from an out of band data stream generated at the head end into a format such that, when received by the receiver, the same is received and processed via the DOCSIS modem.

2. A system according to claim 1 **characterised in that** the broadcast data receivers do not include an Out Of Band (OOB) tuner.

3. A system according to claim 1 **characterised in that** the transcoder unit transcodes data between the OOB data stream and Ethernet to allow the transmission of the transcoded data and reception of same by a plurality of receivers in the transcoded format.

4. A system for the transmission of digital data between a broadcast location and a plurality of receiver locations, each receiver location including a broadcast data receiver for the processing of the data and generation of video, audio and/or auxiliary data from said received data, each broadcast data receiver including a DOCSIS modem, or equivalent and capable of transmitting data from the receiver to the broadcast location and **characterised in that** in the transmission of data from a receiver to the broadcast location there is provided a data reformatting unit which upon receiving data from any of the receivers reformats the same as required.

5. A system according to claim 4 **characterised in that** the reformatting unit at the broadcast location allows for transcoding of data between the Ethernet and the Out of Band data.
